# EUROPEAN PATENT APPLICATION

(11) **EP 1 376 074 A2**
(43) Date of publication of application: **02.01.2004**
(21) Application number: 03254012.2
(22) Date of filing: 25.06.2003
(51) Int. Cl.: G01F 15/00, G05D 7/00, F16K 17/00

(54) **Domestic gas meter with an improved safety level and a control and safety system for a gas supply service which includes this gas meter**

(30) Priority: 27.06.2002 IT MI20021421
(71) Applicant: Nuovo Pignone Holding S.P.A., 50127 Florence (IT)
(72) Inventor: Grilli, Andrea, 30175 Mestre-Venezia (IT); Bassetti, Mirko, 20025 Legnano (MI) (IT)
(74) Representative: Pedder, James Cuthbert

(57) **Abstract**

A domestic gas meter (10) with an improved safety level, of the type comprising a case (12) with an intake (14) for a gas pipe which comes from a supply network and an outlet (16) for a gas pipe directed to a user, a gas metering element (20) being provided between the intake (14) and the outlet (16); this gas meter (10) includes an interception valve (18) in order to interrupt the flow of gas.

The invention also relates to a control and safety system (110) for a gas supply service, which includes a first module (112) comprising the said gas meter (10), a second module (114) including a gas detector device (116) and a third module (118) comprising a means for communication towards the exterior (120).

## Description

The present invention relates to a domestic gas meter with an improved safety level and to a control and safety system for a gas supply service which includes this gas meter.

In the known art, domestic gas meters are devices for metering gas consumption, which are generally located inside dwellings, or in the vicinity of the latter.

These meters inform the gas supply companies of the quantities of fuel used by the clients, by means of readings carried out by the employees of the companies themselves, or also by the client himself.

In the vicinity of the gas meters, there can be provided valves to intercept the flow of gas, which are activated for example in the case of interruption of the supply of fuel by the company, or for obvious safety reasons if gas leaks are noticed.

The interventions to interrupt and/or enable the distribution of the gas necessarily take place by means of physical intervention on the premises of the user by an engineer of the company. This involves substantial costs, particularly when management has to be carried out of clients who are in arrears, and in particular when the gas meter is located inside the property.

Furthermore, with reference to protection against the presence of gas inside the dwelling, and in general inside the property, it should be noted that there exist devices to control the danger of explosiveness, i.e. detectors of the concentration of carbon monoxide CO, methane gas, or liquid propane gas LPG, which are installed and controlled by the owners or tenants of the dwellings themselves.

In general, the gas supply companies do not offer particular services to the client for protection against gas leaks in dwellings.

In order to complete the picture concerning gas supply companies, it should be remembered that at present there are companies which, in an industrial context in particular, use remote reading devices for creation of a data bank relating to the gas consumption, in order to monitor the distribution network, analyse the load curves, and optionally make this information available to the user for invoicing purposes.

However, these remote reading devices are always very costly solutions, such that at present, in order to invoice consumption, the companies rely on the user's own reading of the meter, and on a subsequent check by the meter reader in order to specify the actual consumption.

More generally, the gas supply companies have not offered the users automation products and services which are satisfactory for management of alarms and in general of domestic appliances, i.e. for what is known as home automation.

The present invention thus seeks to eliminate the disadvantages previously described, and in particular to provide a domestic gas meter with an improved level of safety and a control and safety system for a gas supply service which includes this gas meter, and which allow the users to enjoy an improved safety level inside their dwellings.

The present invention further seeks to provide a domestic gas meter with an improved safety level and a control and safety system for a gas supply service which includes this gas meter, which are particularly reliable, simple and functional, and have relatively low costs.

According to a first aspect of the invention, there is provided a domestic gas meter with an improved safety level, of the type comprising a case with an intake for a gas pipe which comes from a supply network and an outlet for a gas pipe directed to a user, a gas metering element being provided between the said intake and the said outlet characterised in that it includes an interception valve in order to interrupt the flow of gas.

According to a second aspect of the invention, there is provided a control and safety system for a gas supply service, characterised in that it includes a first module comprising a gas meter as described above, a second module including a gas detector device and a third module comprising a means for communication towards the exterior.

Further characteristics of the domestic gas meter with an improved safety level, and of the control and safety system for a gas supply service which includes this gas meter, are also included in the invention.

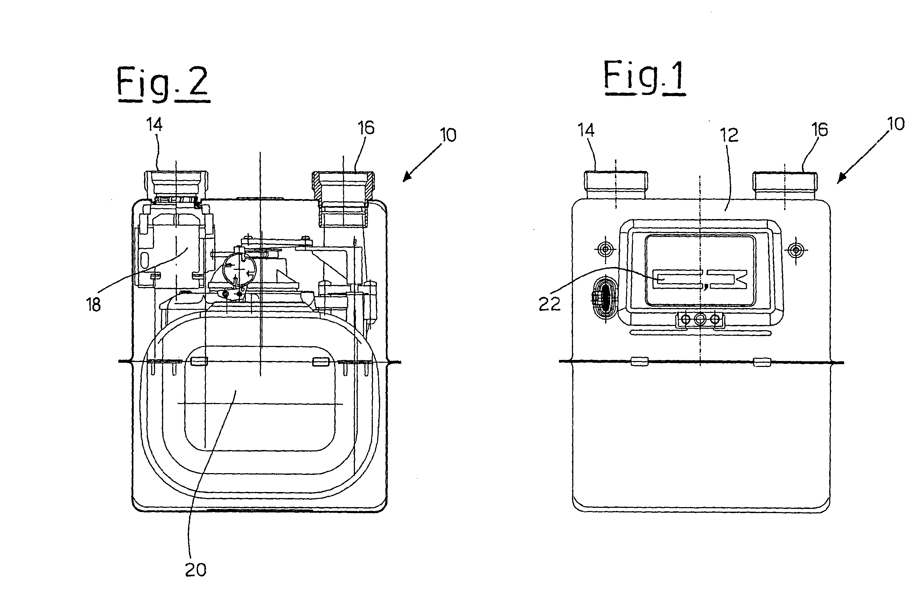

The invention will now be described in greater detail, by way of example, with reference to the drawings, in which:-
Figure 1 is an elevated front view of a domestic gas meter according to the present invention;
Figure 2 shows an elevated front view in cross-section of the domestic gas meter in figure 1;
Figure 3 illustrates a control and safety system according to the invention, for a gas supply service, which includes the gas meter in figure 1; and
Figure 4 shows the control and safety system in figure 3, including other controls on domestic appliances.

The figures show a domestic gas meter with an improved safety level, which is indicated as 10 as a whole.

In the example illustrated, according to the present invention the domestic gas meter 10 comprises a case 12 with an intake 14 for a gas pipe coming from a supply network, and an outlet 16 for a gas pipe directed to a user.

After the intake 14, inside the case 12, an interception valve 18 is provided in order to interrupt the flow of gas.

Again inside the case 12, and in general after the interception valve 18, there is present the gas metering element 20, which is connected to a digital display unit 22, which can be seen from the exterior of the case 12.

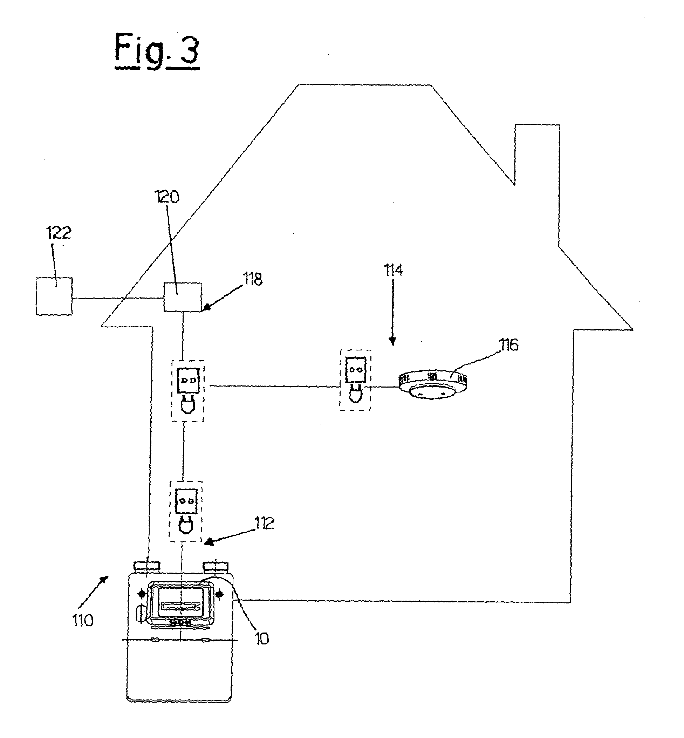

A control and safety system for a gas supply service which includes this gas meter 10 is shown in figure 3, and is indicated as 110 as a whole.

The system comprises some nodes or modules with reduced dimensions.

A first module 112 comprises the gas meter 10, a second module 114 includes a gas detector device 116, which is used in an office or dwelling, and a third module 118 comprises a means for communication towards the exterior 120. The means for communication can utilise a telephone network, a cellular network such as GSM, or an optical fibre network.

Briefly, the control and safety system 110 according to the invention functions as follows.

The first module 112 controls the interruption and re-opening of the flow of gas, by controlling the interception valve 18, which is generally a solenoid valve, of the gas meter 10. In addition, the first module 112 receives metering pulses which are obtained from the meter 10 itself.

The second module 114 controls the state of the ambient air, and thus in practice the concentration of carbon monoxide CO, methane and/or liquid propane gas LPG. In the event of dangerous concentrations, it communicates with the first module 112 in order to carry out closure of the interception valve 18 of the meter 10.

The third module 118 is used to communicate with the exterior to a call centre 122, transferring to the latter some information relating for example to the type of alarm and state of the solenoid valve 18 of the meter 10, as well as the identification number of the user from which the alarm is obtained.

All the modules 112, 114 and 118 are connected to the electrical system of the dwelling, and they communicate and are supplied via the system, in accordance with a known art such as the LonWorks technology created by the US consortium "Echelon".

The system includes the presence of buffer batteries in order to control the situation of unforeseen and temporary absence of the electrical energy.

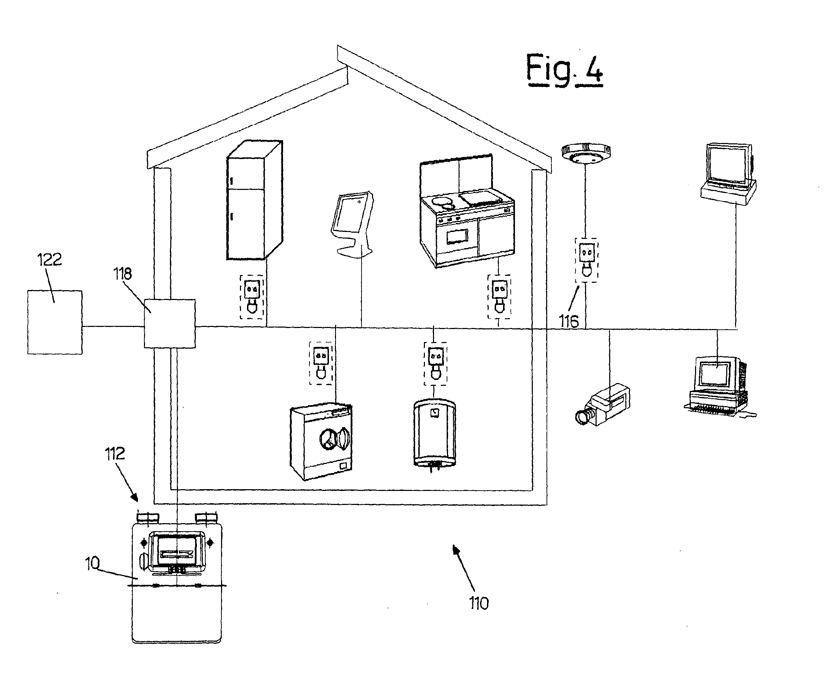

Figure 4 shows how the safety and control system 110 in figure 3 can be extended to include further modules.

These further modules control other alarms and devices for domestic usage such as a boiler, a water meter, an electrical energy meter, flood sensors, an irrigation system, a device for remote assistance, and others.

These modules enter into communication with the call centre in order to complete an automation service package which the gas supply company, or at this point a multi-service company, can distribute.

External communications take place in almost all cases from the modules on the users' premises, to the call centre, and far more rarely in the opposite direction, when, for example, it is required to interrupt the gas supply by force owing to arrears or termination of the contract, or when it is wished to enable opening of the flow of gas because of taking over, or a new contract.

In addition, the control and safety system 110 can carry out the function of recording data, i.e. as a data-logger, in other words it can store the consumption details locally and download them to the call centre, in accordance with a dynamic temporal monitoring schedule, which in turn can be modified by the call centre.

By this means it is possible to control the invoicing of the gas in accordance with multiple hourly tariffs, i.e. according to a specific commercial profile to which the user can subscribe.

Furthermore, it is possible to control the distribution of the gas on the basis of a pre-paid credit, which is also associated with a particular commercial profile, and to interrupt the gas automatically when this credit is used up.

The second module 114 can be provided such as to include any gas detector device 116 commercially available, or alternatively an integrated gas detection sensor (methane, carbon monoxide CO, and liquid propane gas LPG).

In the latter case, in particular for the CO detection sensor, a microprocessor of the module 114 can manage and control the decline of the sensor itself, by monitoring its operating curve. This solves to a large extent the problem of the reliability of some of the detection systems which are commercially available at present. In fact, the alarm of these systems often goes off unnecessarily, or the systems do not function when there is gas in the air.

The efficiency of the sensor is controlled by the module 114 itself up to a threshold, below which a light-up and acoustic warning is emitted, together with a maintenance request via the call centre for replacement of the sensor alone.

In addition, the control and safety system 110 can also include software programming for management of the call centre, data, communications, and corresponding physical hardware structure. The software can also include management of other automation services, such as those shown in figure 4, for example remote assistance, control of energy absorption and management of the corresponding household appliances, flood alarm, programming of functioning of a boiler, programming of irrigation, protection against burglary, and air conditioning. In addition, it is possible to provide the clients with access via the Internet to the data and to the corresponding monitoring and programming services.

If the external communications take place on a fixed telephone line, use of a freephone number may be planned, in order to avoid costs payable by the user.

It should be noted that in a preferred embodiment, the control and safety system 110 uses a technology known as "LonWorks" produced by the consortium "Echelon", which makes it possible to produce a control network known as the "LON network".

This involves a series of intelligent devices, known as nodes or modules, which are connected to a single control network, without using a conventional structure of the hierarchical "master-slave" type, of the type used in programmable logic controllers PLC. It uses a structure wherein each individual node is a "master", and is therefore functionally independent from the others.

Therefore, by means of the "LonWorks" standard, the management and control system 110 can undergo rapid personalisations which permit additions of other optional nodes or modes which are also dedicated to management of other devices, and/or to carrying out other functions. Owing to their distributed intelligence, it is not necessary to have to re-design the system 110 itself.

The network is managed by a standard protocol of the "LonWorks" standard known as "LonTalk protocol", and can be produced equally well using various transmission methods, i.e. an interlaced pair, conveyed waves, radio frequency and optical fibres.

Using the "LonWorks" standard it is possible to provide a solution to the needs of the gas company and the users and to overcome the main problem, which consists of laying cables inside the property, since use is made of the electrical system which already exists in the property (dwelling, block of flats, office, firm, etc). This problem can be to the detriment of most interests in relation to a system for management and control in a domestic environment.

In fact, the costs which are associated with laying of dedicated cables for production of the network, as well as the negative psychological impact on the users as a result of the high level of invasiveness involved in laying the cables, previously counteracted the advantages of flexibility of a system of this type.

Thus, according to a preferred embodiment, the kit for a safety and control system 110 comprises three modules 112, 114 and 118, which are supplied with 220 V alternating current voltage and a frequency of 50 Hz, connected via a communication unit on a power line which uses signals modulated on band C, which is the band for communication on a power line approved by the body CENELEC, with standard EN50065-1. Communication of the system 110 with the call centre takes place via the third module 118, which is connected to a telephone line of the analogue type.

The three modules 112, 114 and 118 are physically independent but are connected logically, and are able to guarantee the following functions:
- indication of gas leaks with immediate suspension of distribution and notification of the alarm to the call centre;
- electronic reading of the gas consumption, and possibility of transfer of readings to the call centre;
- processing of statistics on the consumption;
- management of hourly bands;
- management of gas supply in pre-payment mode;
- two-way communication between the system and the call centre;
- possibility of suspension and re-activation of gas supply by the call centre;
- management of alarms for malfunctioning of, tampering with, and efficiency of the system; and
- management of functioning in conditions of lack of electrical supply (with buffer batteries).

More particularly, the second module 114 is produced such as to carry out the following functions:
- detection of gas leaks;
- notification of alarms to the first 112 and third 118 modules;
- re-arming of the solenoid valve of the meter 10, optionally further to explicit authorisation by the call centre;
- checking of functionality of the gas detector device 116;
- automatic diagnosis of the state of efficiency of the gas detector device 116, with visual indication and notification to the call centre, to request replacement or maintenance;
- visual indication of the state of supply of the gas detector device 116;
- visual indication of the state (open or closed) of the solenoid valve of the meter 10;
- visual indication of abnormalities of the gas detector device 116 or gas leak alarm;
- acoustic alarm signal; and
- availability of an auxiliary input which can be configured as normally open or normally closed for additional signals.

The first module 112, which is connected to the gas meter 10, is produced such as to carry out the following functions:
- reading of the pulses generated by the gas meter 10 for electronic metering of the gas distributed;
- control of the solenoid valve of the gas meter 10;
- checking of the state of the solenoid valve (open/closed);
- checking for tampering with the gas metering element 20;
- checking for tampering with the connection cable between the meter 10 and the solenoid valve 18 (for example cutting of the cable or short circuiting);
- checking for tampering with the connection cable between the meter 10 and the metering element 20 (for example cutting of the cable or short circuiting);
- checking for fraud involving the metering element 20 (for example tampering by means of magnets);
- transmission of the reading to the call centre via the third module 118 (the date and time of the transmission can be programmable); and
- checking of the state of the gas detector device 116 (for example once per minute).

In addition, the control and safety system 110 can also carry out functions of filing, pre-payment, and hourly bands.

As far as filing is concerned, it is possible to record, with variable frequency, parameters such as consumption, reading time, day and month of reading, state of the solenoid valve 18, and any tampering or attempted fraud.

From the call centre it is possible to programme the control and safety system 110 by setting the values of date and time at which reading must take place, and/or frequency of reading.

As far as pre-payments are concerned, the following activities and parameters are added to the above-described filing functions:
- management of the commercial profile of the user by means of the call centre;
- management of the pre-paid credit by means of the call centre;
- management of distribution of the gas and debiting on the basis of the commercial profile (hourly bands with variable cost per hourly band);
- double-threshold management before interruption of the gas distribution; and
- management of residual credit after the latest re-loading.

There can optionally be acoustic and/or visual indication if the credit is used up and distribution of the gas is interrupted.

When the meter 10 comes into communication with the call centre, there is transfer to the meter of the value of gas pre-paid, the hourly bands, and in particular the tariff profile allocated to the user, and therefore of the price of gas per cubic metre, according to the hourly bands themselves.

There is also the possibility of recuperating residual credit if the meter 10 is faulty, except of course in cases of particularly serious damage.

As far as management of the hourly bands is concerned, in the above-described filing and pre-payment functions there is integrated setting of the hourly bands by the call centre (which can be carried out before the band comes into effect).

The reference currency is variable, and is selected and set by the call centre operator, as is the price of the gas in variable proportion with the cubic metre, the hourly bands, and therefore the commercial profiles.

These functions can be understood to be guaranteed with the three modules 112, 114 and 118 supplied with 220 V of alternating current. If the mains supply fails, the system 110 functions by means of additional batteries which are accommodated in the system itself. In this case, the functioning without a supply is modified as described hereinafter:
- the filing and reading take place at an hourly rate, from the time at which the mains supply ceases;
- the functioning of the metering element 20 is guaranteed by a lithium battery;
- the functioning by means of batteries is recorded in the file;
- the functioning by means of batteries is guaranteed for example for five days, after which the solenoid valve 18 will be closed and only the safety devices will remain active;
- when the power is restored it is possible to re-arm the solenoid valve 18; and
- when the solenoid valve 18 is re-armed, the call centre is notified of re-setting of the first module 112, and of any alarms which have taken place during the period of suspension of distribution of the gas.

In any case, if the supply is lacking, reading and storage of the pulses obtained from the gas meter 10 are always guaranteed; by this means, there is no misalignment between what is indicated by the system 110 and the real consumption. This is always made possible by the presence of a small buffer battery which does not allow the first module 112 to switch off completely.

The functions carried out by the third module 118 are now specified, and are as follows:
- two-way communication between the system 110 and the call centre;
- management of calls to the call centre (which can also be programmable);
- management of communications to the call centre, which include transmission of readings, the state of the gas detector device 116, the state of efficiency of the gas detector device 116, the state of the solenoid value 18, and the state of tampering; and
- management of communications from the call centre.

It is also possible to synchronise from the call centre the reading of the metering element 20, in the event of any misalignment between what is indicated by the digital display 22 and the value stored by the first module 112, for example in the case of new installation and/or replacement of the gas meter 10 on the premises of the user.

In the third module 118, a copy of the file is created, and if in addition the mains supply is lacking, the third module 118 functions with additional batteries which are accommodated in the module 118 itself. In this case, the functioning without a supply is modified as described hereinafter:
- transmission, for example after 24 hours, of the data recorded at the moment of suspension of the mains supply, and indication of the state of functioning with batteries;
- notification to the call centre of restoration of the mains supply (for example after three or five days' functioning with batteries).

The call centre is designed to manage and connect to one another all the users and the various service providers.

Advantageously, the data transmitted to the call centre by all the users controlled will be as follows:
- gas leak alarm;
- auxiliary intake alarm;
- alarm for abnormality of gas detector device 116;
- alarm for abnormality of the metering element 20;
- alarm for tampering with the metering element 20;
- alarm for tampering with the cable between the solenoid vale 18 and the metering element 20;
- alarm for tampering with the pulse-counter cable of the metering element 20;
- alarm for tampering with the pulse counter (for example with a magnet);
- state of the solenoid valve 18; and
- reading of consumption.

All this information is saved and processed in a central data bank, and can be displayed by means of Internet pages and/or directly on dedicated electronic computers.

The frequency of transmission by the individual user is pre-set by the call centre.

If, when it calls the call centre, the third module 118 finds the telephone line engaged, the call is repeated for a pre-programmed number of times; in the event of a further negative response, the third module 118 waits the amount of time set, in order to re-transmit the data.

If the system 110 goes into an alarm state, in the event of a lack of signal, or if the line is engaged, the third module 118 dials the number continually until it has obtained a connection with the call centre.

At any moment the call centre operator can connect to the individual user, by transferring the following parameters:
- closure of the solenoid valve 18;
- opening of the solenoid valve 18;
- authorisation for re-setting of the solenoid valve 18;
- programming of the date and time of call of the third module 118;
- frequency of calling of the third module 118;
- attempts to call by the third module 118; and
- checking of functioning of the detector device 116.

Whenever a connection is established, the system 110 updates the reading and the individual modules, also in order to provide the user via the Internet with a situation which is as close as possible to reality.

Via the Internet the user can display the data for his own consumption up to the latest useful reading taken, and can focus the state of his own system.

The call centre management programme can distribute a service which can be used both by the gas company and by its users.

Consequently, this programme provides access, locally and/or remotely via the Internet, to all the information and parameters indicated up to that point, and can manage satisfactorily the competences and safety levels, according to the type of request and user.

In particular, there can be three functions in addition to the basic platform, i.e. management of statistics, management of the hourly bands and management of pre-payments.

As far as management of statistics is concerned, the following should be remembered.

In order to gain shares of the market, gas supply companies are using instruments which are increasingly more efficient and direct as further support for the commercial activity. Consequently, the people who are responsible for a company must have at their disposal significant information and data.

By using the system 110 which is the subject of the present patent, it is possible to obtain the most dynamic picture possible of the market situation and of its potential. The word dynamic is used because the company carries out activity which is developed over a certain period of time, and the consequences of which extend into the future.

The filing method also of the system 110, wherein with programmable frequency there is storage of a reading, the date, time, state of the solenoid valve 18, state of tampering and of the fraud file, permits generation of a service of monitoring of the consumption.

Via the Internet it is possible to obtain statistical data and diagrams, both for individual users and macro-sectors, wherein the user can display his own hourly consumption and the distribution companies can monitor the flows of consumption and the load curves, by this means implementing optimisation of distribution, together with potential flexibility in contractual solutions.

However, as far as management of the hourly bands is concerned, the following should be remembered.

It is possible to subdivide the consumption into hourly bands, for example according to the following plan: band from Monday to Friday, band for Saturday and band for Sunday.

The purpose of inclusion of the hourly bands is to allow the distribution company to apply an hourly tariff. Once the pre-selected configuration has been defined, when the calls reach the call centre, included in the data imparted there will also be setting of the modules on the users' premises, taking into account the fact that this operation can be carried out before the band is activated, or at the same time that it is changed.

As far as management of the statistics is concerned, the following should be remembered.

The transition to management of consumption which is based on pre-payment becomes minor, once the first two functionalities have been activated.

The management can take place for example in a very simple manner, which is similar to that which applies at present for cellular telephony, i.e. the user purchases a top-up (in other words a pre-paid card), and by means of a freephone number or via the Internet site indicates his personal codes and the serial number which is applicable for the top-up.

Having checked the authenticity of the top-up, the call centre will call the system 110, from which initial authentication of access will be obtained; if an incorrect code is transmitted three times in succession, the system will block all communication to the interior, and will transmit the fact that an attempted fraud has taken place.

When the origin of the call has been ascertained, the third module 118 transmits a code for selection of the level of encrypted communication; in this case also, the transmission of an incorrect code to the system three times in succession will block all communication to the interior, and will transmit the fact that an attempted fraud has taken place.

Finally, a third authentication is requested relating to the gas meter 10, in order to be able to enter the updated credit and commercial profile selected, wherein in this case also, if an incorrect code is entered three times, a message will be transmitted such that the system will block all communication to the interior, and will transmit the fact that an attempted fraud has taken place.

Once the credit has been topped up, the user can use the services offered by the gas company until the credit is used up, and optionally an acoustic signal emitted by the gas detector device 16 and/or by the third module 118 will warn the user that the credit is about to be used up. The call centre sets both the frequency of updating of the residual credit and the credit threshold for emission of the acoustic signal.

In the present state of the art, the call centre is the most efficient means for attacking and sounding out the market quickly and efficiently. In order to achieve this aim, it uses a modular structure, wherein, when the conditions vary, or when needed, updating and implementation is always possible without ever losing the functions already activated.

The call centre consists of a hardware and software structure which is implemented with a flexible, modular structure such as to permit easy configurations, according to the specific applicative requirements.

The call centre manages calls from/for the systems, and manages a file and Internet service for the users of services or for network managers.

The size of the entire configuration of the individual parts of the call centre is based on the number of users managed and the number of telephone lines to be managed.

The system modules 110 described hitherto are advantageously provided with a plastic container, and in particular the level of protection of the gas meter 10 is IP 65.

As far as the stage of installation of the system 110 is concerned, the modules will leave the production line provided with a compact disc containing the list of the identification codes of all the modules which belong to the specific supply batch. By this means, the kit can be installed on the users' premises without any technical operation for commissioning and functioning, since, once the modules are connected to the electrical socket, they will already be operative to communicate with one another, with the call centre and vice versa.

In a further embodiment, the control and safety system 110 includes two modules, a module 112 comprising the gas meter 10, and a further module 118 comprising a means for communication with the exterior 120. In this case the system manages consumption load curves, hourly bands, prepaid credit and any additional devices (electrical energy meter, water meter, remote assistance, etc).

The description provided makes apparent the characteristics of the domestic gas meter with an improved safety level and of the control and safety system for a gas supply service which includes this gas meter which is the subject of the present invention, and also makes apparent the corresponding advantages, which, it will be remembered, include:
- possibility of selling and utilising services mainly in a safe gas environment, and in general in domestic automation: in particular a service package for the users, which includes for example distribution of gas, assistance, and maintenance of the network of distribution and fuel systems, including inside the dwelling, multiple hourly tariffs, differentiated commercial profiles, pre-payment, remote activation and deactivation of contracts, etc;
- remote reading of meters for evaluation of consumption of gas, water, heat and electrical energy;
- possibility of obtaining a precise data bank on consumption for processing of a statistical type, for monitoring of leaks, and for detection of load curves;
- possibility of remote management of the gas supply, i.e. the possibility of interrupting and/or enabling distribution of the gas: for example cut-off because the user is in arrears, temporary interruption because of taking over by a tenant, a new contract, etc.;
- control of explosiveness and concentration of carbon monoxide CO, methane and liquid propane gas LPG;
- management of alarms and appliances for domestic use for automation services;
- possibility of having available instruments to face up to the competition and strengthen one's leadership, and to acquire new business by means of innovations and customer service: this is what is becoming necessary at present, owing to the opening up of the market.

For the sake of good order, various aspects of the invention are set out in the following clauses:-
1. Domestic gas meter (10) with an improved safety level, of the type comprising a case (12) with an intake (14) for a gas pipe which comes from a supply network and an outlet (16) for a gas pipe directed to a user, a gas metering element (20) being provided between the said intake (14) and the said outlet (16), characterised in that it includes an interception valve (18) in order to interrupt the flow of gas.
2. Gas meter (10) according to clause 1, characterised in that the said interception valve (18) is disposed after the said intake (14), inside the said case (12).
3. Gas meter (10) according to clause 2, characterised in that the said gas metering element (20) is disposed after the said interception valve (18), the said gas metering element (20) being connected to a digital display (22) which can be seen outside the said case (12).
4. Gas meter (10) according to clause 1, characterised in that the said interception valve (18) is a solenoid valve.
5. Control and safety system (110) for a gas supply service, characterised in that it includes a first module (112) comprising a gas meter (10), a second module (114) including a gas detector device (116) and a third module (118) comprising a means for communication towards the exterior (120), the said gas meter (10) being produced according to clauses 1 or 2 or 3 or 4.
6. Control and safety system (110) for a gas supply service, characterised in that it includes a module (112) comprising a gas meter (10) and a further module (118) including a means for communication towards the exterior (120), the said gas meter (10) being produced according to clauses 1 or 2 or 3 or 4.
7. Control and safety system (110) according to clause 5, characterised in that the said means for communication towards the exterior (120) uses a telephone network, a cellular network, a radio frequency or an optical fibre network.
8. Control and safety system (110) according to clause 5, characterised in that the said first module (112) manages interruption and re-opening of the gas flow, by controlling an interception valve (18), the said first module (112) also receiving metering pulses obtained from the said meter (10).
9. Control and safety system (110) according to clause 5, characterised in that the said second module (114) controls the concentration of carbon monoxide CO, methane and/or liquid propane gas LPG in a closed environment, by communicating with the said first module (112) in the event of dangerous concentrations, in order to give rise to closure of an interception valve (18).
10. Control and safety system (110) according to clause 5, characterised in that the said third module (118) communicates with the exterior towards a call centre (122).
11. Control and safety system (110) according to clause 10, characterised in that information relating to an alarm and to a state of an interception valve (18) is transferred to the said call centre (122), as well as a number which identifies a user from which the said alarm is obtained.
12. Control and safety system (110) according to clause 5, characterised in that the said first (112), second (114) and third modules (118) are connected to an electrical system of a dwelling and/or block of flats, and communicate and are supplied by means of this system.
13. Control and safety system (110) according to clause 5, characterised in that the said first (112), second (114) and third modules (118) are each provided with a buffer battery.
14. Control and safety system (110) according to clause 5, characterised in that it includes further modules, the said further modules controlling other alarms and devices for domestic use.
15. Control and safety system (110) according to clauses 10 and 14, characterised in that the said other alarms and devices for domestic use comprise a boiler, a water meter, an electrical energy meter, a heat meter, a household appliance, flood sensors, an irrigation system, and/or a device for remote assistance, the said further modules entering into communication with the said call centre (122).
16. Control and safety system (110) according to clause 5, characterised in that a record is provided of consumption data detected by the said gas meter (10).
17. Control and safety system (110) according to clause 16, characterised in that, on the basis of the said record of consumption data, invoicing of the gas is managed according to multiple hourly tariffs, i.e. according to a specific commercial profile to which a user subscribes.
18. Control and safety system (110) according to clause 16, characterised in that, on the basis of the said record of consumption data, distribution of the gas is managed in accordance with a pre-paid credit which is associated with a specific commercial profile to which a user subscribes, the supply of gas being interrupted automatically when the said credit is used up.
19. Control and safety system (110) according to clause 5, characterised in that the said second module (114) includes an integrated gas detection sensor.
20. Control and safety system (110) according to clause 19, characterised in that a microprocessor of the said second module (114) can control and manage the functioning of the said detection sensor.
21. Control and safety system (110) according to clause 20, characterised in that the control is carried out by the said second module (114) up to a threshold of efficiency of the said detection sensor, below which a request for maintenance is sent to a call centre.
22. Control and safety system (110) according to clause 10, characterised in that it comprises a management programme or software of the said call centre (122).
23. Control and safety system (110) according to clause 10, characterised in that the said call centre (122) is also accessible via the Internet.
24. Control and safety system (110) according to clause 10, characterised in that communications towards the said call centre (122) take place on a fixed telephone line with use of a freephone number.
25. Control and safety system (110) according to clause 5, characterised in that it uses a technology known as "LonWorks" produced by the consortium "Echelon", which makes it possible to provide a control network known as the "LON network".
26. Control and safety system (110) according to clause 25, characterised in that the said technology comprises a series of intelligent devices known as nodes or modules, which are connected to a single control network, each of the said nodes being a "master", which is functionally independent from the others.
27. Control and safety system (110) according to clause 5, characterised in that the said modules (112, 114, 118) are supplied with 220 V alternating current voltage and a frequency of 50 Hz, and are connected by means of communication on a power line using signals modulated on band C, the said third module (118) being connected to a telephone line of an analogue type.
28. Control and safety system (110) according to clause 5, characterised in that the said second module (114) detects gas leaks, communicates alarms to the said first (112) and to the said third (118) modules, re-arms an interception valve (18), and checks the functionality of the said gas detector device (116).
29. Control and safety system (110) according to clause 5, characterised in that the said first module (112) reads pulses which are generated by the said gas meter (10) for electronic metering of the distribution of gas, controls an interception valve (18), and checks for tampering with the said gas meter (10).
30. Control and safety system (110) according to clause 10, characterised in that, in the said call centre (122), the said call centre (122) stores with variable frequency the consumption, time of reading, day and month of reading, state of an interception valve (18), and tampering or attempted fraud, with setting being provided of the values of the date and time at which a reading takes place, and/or the frequency of reading.
31. Control and safety system (110) according to clause 30, characterised in that the said call centre (122) manages a commercial profile of a specific user, credit pre-paid by the said user, distribution of gas and debiting on the basis of the said commercial profile, a dual threshold before interruption of distribution of the gas, and residual credit after the latest top-up.
32. Control and safety system (110) according to clause 31, characterised in that the said call centre (122) manages setting of hourly payment bands.
33. Control and safety system (110) according to clause 13, characterised in that functioning without a mains electrical supply involves filing and reading which take place at specific intervals, the functioning of a gas metering element (20) being guaranteed by a lithium battery.
34. Control and safety system (110) according to clause 10, characterised in that the said third module (118) communicates to the said call centre (122) a gas consumption reading, a state of the said gas detector device (116), a state of efficiency of the said gas detector device (116), a state of an interception valve (18), and the state of any tampering.
35. Control and safety system (110) according to clause 34, characterised in that, in the said third module (118), a file copy is created of data transmitted to the said call centre (122).
36. Control and safety system (110) according to clause 10, characterised in that the said call centre (122) opens and closes an interception valve (18), programmes the date and time of calling of the said third module (118) or a frequency of calling of the said third module (118), and checks the functioning of the said gas detector device (116).
37. Control and safety system (110) according to clause 10, characterised in that information received by the said call centre (122) is saved and processed in a central data bank and is displayed via Internet pages and/or directly on dedicated electronic computers.
38. Control and safety system (110) according to clause 5, characterised in that the said modules (112, 114, 118) are provided with a plastic container, and the level of protection of the said gas meter (10) is IP 65.

## Claims

1. Domestic gas meter (10) with an improved safety level, of the type comprising a case (12) with an intake (14) for a gas pipe which comes from a supply network and an outlet (16) for a gas pipe directed to a user, a gas metering element (20) being provided between the said intake (14) and the said outlet (16), **characterised in that** it includes an interception valve (18) in order to interrupt the flow of gas.

2. Gas meter (10) according to claim 1, **characterised in that** the said interception valve (18) is disposed after the said intake (14), inside the said case (12).

3. Gas meter (10) according to claim 2, **characterised in that** the said gas metering element (20) is disposed after the said interception valve (18), the said gas metering element (20) being connected to a digital display (22) which can be seen outside the said case (12).

4. Gas meter (10) according to claim 1, **characterised in that** the said interception valve (18) is a solenoid valve.

5. Control and safety system (110) for a gas supply service, **characterised in that** it includes a first module (112) comprising a gas meter (10), a second module (114) including a gas detector device (116) and a third module (118) comprising a means for communication towards the exterior (120), the said gas meter (10) being produced according to claims 1 or 2 or 3 or 4.

6. Control and safety system (110) for a gas supply service, **characterised in that** it includes a module (112) comprising a gas meter (10) and a further module (118) including a means for communication towards the exterior (120), the said gas meter (10) being produced according to claims 1 or 2 or 3 or 4.

7. Control and safety system (110) according to claim 5, **characterised in that** the said means for communication towards the exterior (120) uses a telephone network, a cellular network, a radio frequency or an optical fibre network.

8. Control and safety system (110) according to claim 5, **characterised in that** the said first module (112) manages interruption and re-opening of the gas flow, by controlling an interception valve (18), the said first module (112) also receiving metering pulses obtained from the said meter (10).

9. Control and safety system (110) according to claim 5, **characterised in that** the said second module (114) controls the concentration of carbon monoxide CO, methane and/or liquid propane gas LPG in a closed environment, by communicating with the said first module (112) in the event of dangerous concentrations, in order to give rise to closure of an interception valve (18).

10. Control and safety system (110) according to claim 5, **characterised in that** the said third module (118) communicates with the exterior towards a call centre (122).
